# EUROPEAN PATENT APPLICATION

(11) **EP 0 583 159 A2**
(43) Date of publication of application: **16.02.1994**
(21) Application number: 93306329.9
(22) Date of filing: 11.08.1993
(51) Int. Cl.: C08L 83/05, C08L 83/07, C08K 5/56, C08K 9/10, C08G 77/50

(54) **Preparation of heat curable organopolysiloxanes**

(30) Priority: 13.08.1992 US 928576
(71) Applicant: GENERAL ELECTRIC COMPANY, Schenectady, NY 12345 (US)
(72) Inventor: Lewis, Larry Neil, Scotia, New York 12302 (US); Sumpter, Chris Allen, Scotia, New York 12032 (US)
(74) Representative: Pratt, Richard Wilson

(57) **Abstract**

A method is provided for making a one part heat curable platinum group metal catalyzed organopolysiloxane composition exhibiting improved shelf stability which employs as the platinum group metal catalyst an inclusion compound of a cyclodextrin and a platinum group metal material which is made by initially recovering the catalyst in crude form as an inclusion compound of a cyclodextrin and a platinum group metal material from an aqueous mixture, drying the crude complex and thereafter washing the resulting dried product with an organic solvent until the resulting inclusion compound is substantially free of uncombined guest molecules.

## Description

### Cross Reference to Related Applications

Reference is made to copending application RD-22,236, which is filed concurrently herewith.

### Background of the Invention

The present invention relates to a method for making one part heat curable organopolysiloxane compositions based on the use of a platinum group metal catalyst in the form of an inclusion compound of a cyclodextrin as the host, and a platinum group metal material as the guest molecule.

Prior to the present invention, as shown by Lewis et al, U.S. Patents 5,025,073, 5,089,582, and 5,106,939, inclusion compounds of cyclodextrin and a platinum group metal material, such as a complex of a platinum halide and cyclooctadiene, or norbornadiene, or a complex of palladium dichloride and 1,5-cyclooctadiene, or a C₍₁₋₄₎ alkyl substituted platinum or a rhodium halide were used as hydrosilylation catalysts in one part heat curable organopolysiloxane compositions. Although one part heat curable organopolysiloxane compositions utilizing an inclusion compound of cyclodextrin as the host and a platinum group metal material as the guest molecule generally provided superior one part heat curable organopolysiloxane compositions having improved shelf stability, it was sometimes found that premature gellation occurred in some of the batches.

In copending application, RD-22,236, a method is described directed to the purification of crude inclusion complexes of cyclodextrin as a host material in combination with a guest material which can include a member selected from a wide variety of substances, such as light mineral oil. After the crude cyclodextrin complex is formed in an aqueous media, the moisture content of the crude cyclodextrin complex is substantially reduced before it is washed with a wash solvent to substantially eliminate uncomplexed guest molecules. As previously discussed, one part heat curable organopolysiloxane compositions which use inclusion compounds of cyclodextrin and platinum group metal materials as latent catalysts can sometimes have inconsistent shelf stabilities. It would be desirable therefore, to evaluate additional procedures for making one part heat curable organopolysiloxane compositions using inclusion compounds of cyclodextrin and platinum group metal complexes as latent catalysts.

### Summary of the Invention

The present invention is based on the discovery that one part heat curable organopolysiloxane compositions can be made which exhibit substantially improved shelf stability, and consistent shelf behavior. It has been found that if inclusion compounds of cyclodextrin and a platinum group metal are used as latent catalysts in one part heat curable organopolysiloxane compositions, where the latent catalysts are made following the stepwise procedure of RD-22,236, the resulting one part heat curable organopolysiloxane compositions have been found to consistently exhibit substantially improved shelf stability at ambient temperatures.

### Statement of the Invention

There is provided by the present invention, a method for making a one part heat curable organopolysiloxane composition comprising a vinyl organopolysiloxane, a silicon hydride siloxane and a platinum group metal material as a latent hydrosilylation catalyst in the form of an inclusion compound of a cyclodextrin and a platinum group metal material, which method comprises, using as the inclusion compound of a cyclodextrin and the platinum group metal material , an inclusion compound prepared by,
(1) blending a platinum group metal material and an aqueous solution of cyclodextrin to produce a precipitate having about 0.5 to 2 equivalents of platinum group metal, per mole of cyclodextrin,
(2) recovering the precipitated material resulting from (1),
(3) drying the recovered precipitated material of (2) until IR or NMR spectral analysis shows it is substantially free of water,
(4) washing the resulting dried product of (3) with an organic solvent until an inclusion compound is provided having cyclodextrin as the host material and platinum group metal material as the guest molecule, which inclusion compound is substantially free of uncombined guest molecules.

The silicone ingredients utilized in making the one part heat curable organopolysiloxane compositions which are made in accordance with the method of the present invention are shown in Lewis et al, U.S. Patent 5,023,073 which is incorporated herein by reference. For example, the one part heat curable organopolysiloxane composition made by the method of the present invention can comprise by weight,
(A) 100 parts of a vinyl-substituted organopolysiloxane fluid,
(B) 1 to 20 parts of a siloxane hydride and
(C) an effective amount of an inclusion compound of a cyclodextrin and a platinum group metal material.

The vinyl-substituted organopolysiloxane fluid, hereinafter can be referred to as the "vinylsiloxane" utilized in the one part heat curable organopolysiloxane compositions of the present invention can have a viscosity of from about 100 to 200,000 centipoises. Although vinyl substitution can be on the polysiloxane backbone, a preferred vinyl siloxane is included within the following formula: 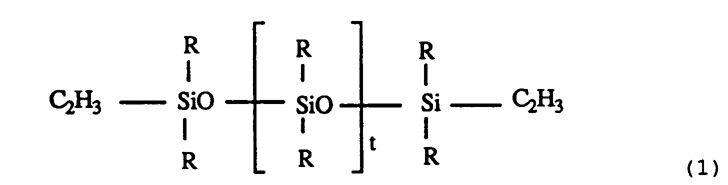
where C₂H₃ is vinyl and R is selected from C₍₁₋₁₃₎ monovalent organic radicals free of olefinic unsaturation, and t is a positive integer having a value sufficient to provide a vinyl siloxane viscosity of from about 100 to 200,000 centipoises at 25°C. Preferably, R is selected from alkyl radicals of 1 to 8 carbon atoms, such as methyl, ethyl, propyl;
monovalent aryl radicals such as phenyl, methylphenyl, ethylphenyl; cycloalkyl radicals, cycloheptyl and haloalkyl radicals such as 3,3,3-trifluoropropyl. Preferably, the vinyl siloxane has terminal units of the formula,

C₂H₃(CH₃)₂SiO_{0.5}

which can vary from about 0.05 to about 3.5 mole percent, based on the total chemically combined siloxy units and preferably from 0.14 to about 32 mole percent.

The vinylsiloxane of Formula (1) can be prepared by equilibrating cyclotetrasiloxane with a vinyl terminated low molecular weight polysiloxane chainstopper. However, if vinyl organosiloxy units are desired in the backbone, a predetermined amount of cyclic vinylorganosiloxane can be used in the equilibration mixture. The chainstopper is preferably a low molecular weight vinyl terminated organopolysiloxane, such as the corresponding disiloxane, trisiloxane, tetrasiloxane. These low molecular weight vinyl terminated polysiloxane polymers are produced by hydrolyyzing the appropriate chlorosilanes particularly vinyldiorganochlorosilane along with diorganodichlorosilane to produce the desired vinyl chainstopped polydiorganosiloxanes. The equilibration catalyst which can be used is preferably a mild acid catalyst, such as toluenesulfonic acid or an acid treated clay. An alkali metal hydroxide as the catalyst such as potassium or sodium hydroxide also can be used as the equilibration catalyst. When the equilibration has proceeded to the point where about 85% of the cyclopolysiloxane has been converted to linear polymer, the acid catalyst can be neutralized or filtered out. Preferably, excess cyclics are stripped off so that the linear polymer will have a low volatile content.

Included within the siloxane hydride is a "coupler", having the formula, 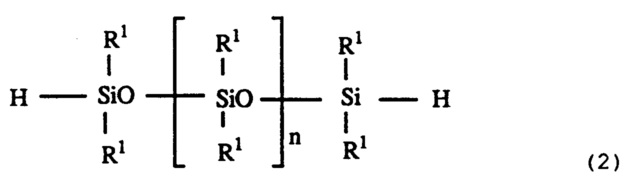
where R¹ is selected from C₍₁₋₁₃₎ monovalent organic radicals free of olefinic unsaturation and n is an integer having a value sufficient to provide the "coupler" with a viscosity of 1 to 500 centipoises at 25°C and from about 3 to 9 mole percent of chainstopping diorganohydride siloxy units, based on the total moles of chemically combined siloxy units in the siloxane hydride.
In addition to the coupler of formula (2), the siloxane hydride used in the heat curable polysiloxane compositions of the present invention also can include siloxane hydride resins consisting essentially of the following chainstopping unit. 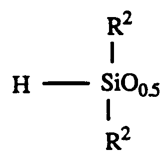
condensed with silicate (SiO₂) units, where the R²+H to Si ratio can vary from 1.0 to2.7. A discussion of silicone resins is shown in Rochow's "Chemistry of the Silicones", pp. 90-94, Second Edition, John Wiley and Sons, N.Y., 1951, which is incorporated herein by reference. Siloxane hydride resins also can have the above condensed chainstopping units chemically combined with SiO₂ units and (R³)₂SiO units, where the R²+R³+H to Si ratio can vary from 1.2 to 2.7, where R² and R³ are C₍₁₋₁₃₎ monovalent organic radicals free of olefinic unsaturation and can be selected from R¹ radicals.

The siloxane hydride resins can be made by hydrolyzing the corresponding hydride chlorosilanes in the presence of an organic hydrocarbon solvent. To prepare resins having only monofunctional (R²)₃Si_{0.5} units and tetrafunctional SiO₂ units, there can be cohydrolyzed a hydrogen diorganochlorosilane and tetrachlorosilane. Resins having monofunctional siloxy units, difunctional siloxy units, and tetrafunctional siloxy units, can be obtained by hydrolyzing a hydorgendiorganochlorosilane, tetrachlorosilane and a diorganodichlorosilane at particular ratios. Additional siloxane hydride resins are shown by Jeram, U.S. Pat. No. 4,040,101 which is incorporated herein by reference.

The siloxane hydride also can include linear organopolysiloxane having the formula, 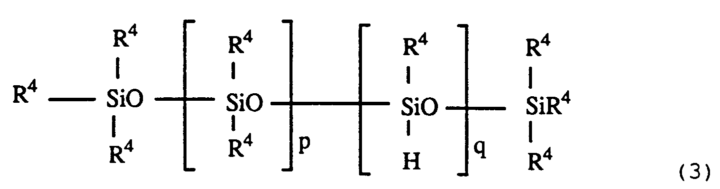
where R⁴ is a C₍₁₋₃ monovalent organic radical free of olefinic unsaturation, and p and q are integers having values sufficient to provide a polymer having a viscosity of from 1 to 1,000 centipoises at 25°C, and wherein the polysiloxane has from 0.04 to 1.4 by weight of hydrogen.

The siloxane hydride of formula (3) can be produced by equilibrating the appropriate hydrogencyclopolysiloxane with the appropriate cyclopolysiloxane containing R⁴ substituent groups, in combination with low molecular weight linear triorganosiloxane chainstoppers.

In formulas (2) and (3), and the above siloxane hydride resins, the chemically combined units can have R¹, R², R³ and R⁴ radicals, which can be the same or different and are selected from alkyl radicals having from 1 to 8 carbon atoms, such as methyl, ethyl, propyl, etc.; cycloalkyl radicals such as cyclohexyl, cycloheptyl, etc.; aryl radicals such as phenyl, tolyl, xylyl, etc.; and haloalkyl radicals such as 3,3,3-trifluoropropyl.

The siloxane hydride of formula (2) is prepared by either a hydrolysis process or by an acid catalyzed equilibration process. In the equilibration process, cyclopolysiloxane is equilibrated with a low molecular weight hydrogen terminated chainstopper, such as a dihydrogentetraorganodisiloxane. The acid catalysed equilibration reaction is similar to the method used for the production of the vinyl containing base polymer. In the hydrolysis process, hydrogendiorganochlorosilane is hydrolyzed with diorganodichlorosilanes to produce the polymer of formula (2). The resulting siloxane hydride can be separated from undesirable cyclics by stripping.

The platinum group metal materials which can be used in the practice of the present invention to make the inclusion compounds are for example, 1,5-cyclooctadiene platinum dichloride, norbornadiene platinum dichloride, 1,5-cyclooctadiene platinum dibromide, 1,5-cyclooctadiene platinum diiodide, **η**⁵-cyclopentadienyltrimethyl platinum, 1,5-cyclooctadienedimethyl platinum, bis[1,5-cyclooctadiene rhodium chloride].

The cyclodextrins which can be used in the practice of the present invention are also called "Schardinger's dextrins", can include cycloamyloses, cyclomaltoses and cycloglucans, and oligomers of anhydroglucose, bonded together by alpha 1,4 bonds to form a ringed compound. A six membered ring is called alpha cyclodextrin, seven, beta cyclodextrin, and eight, gamma cyclodextrin. These six, seven and eight membered rings are also referred to as cyclomaltohexaose, cyclomaltoheptaose and cyclomaltoctaose, respectively.

Conventionally, cyclodextrins are obtained by treating a starch slurry with enzyme or acid to produce a gelatinized and liquefied slurry having a dextrose equivalent between 1 and 5. The gelatinized and liquified starch slurry is then treated with cyclodextrin glycosyltransferase (CGT), at the appropriate pH, temperature and time for the selected CGT. The enzyme, CGT, is obtained from microorganisms such as Bacillus macerans, B. magaterium, B. circulans, B. stearothermohiilus, and Bacillus sp. (alkalophilic) as well as others. The resulting digest from treatment of a gelatinized and liquefied starch slurry with CGT is then subjected to a separation and purification process to obtain cyclodextrins.

One of the commercially important aspects of cyclodextrins is their ability to form complexes with other chemical compounds. Physically a cyclodextrin is donut-shaped and the interior of the donut is hydrophobic. The consequence of this is that the cyclodextrin is able to form an inclusion complex with a substance less polar than water and have an outer geometric dimension which allows it to fit into the cavity of the cyclodextrin. The guest molecule is encapsulated in whole or in part inside the cavity of the cyclodextrin. Generally, the complex is formed to change the solubility of a guest or stabilize the guest. It has also been found that the entrapment of the guest in the cyclodextrin delays or slows the release of the guest molecule for its intended purpose which is beneficial in some situations, see for example U.S. Patent No. 4,774,329 issued September 27, 1988. The term "cyclodextrin" as used in the specification and claims means not only cyclodextrin per se but also a modified cyclodextrin and a branched cyclodextrin.

In the practice of the method of the present invention, a cyclodextrin, which hereinafter means an **α**-cyclodextrin, a **β**-cyclodextrin, or **γ**-cyclodextrin, and preferably a **β**-cyclodextrin, is dissolved in water to produce an aqueous solution having from 0.1% to 30% by weight of cyclodextrin based on the weight of the solution. Preferably, a saturated solution of the cyclodextrin in water is used. A platinum group metal material as previously defined can then be added to the aqueous cyclodextrin solution at temperatures in the range of from 20°C to 80°C which results in the formation of a precipitate. The precipitate is then recovered by various procedures such as filtration, centrufigation, decantation, while filtration is the preferred procedure. The recovered precipitated material can then be optionally washed with water to remove unreacted cyclodextrin.

The crude cyclodextrin-guest complex can then be dried to remove water. Drying can be accomplished at temperatures in the range of between 0°C to 120°C under atmospheric pressure or reduced pressure until no further water is removed by continued drying as determined by ¹H NMR, IR, DSC or similar technique. The resulting dried product can then be washed with an organic solvent. Suitable organic solvents are for example low molecular weight alcohol, such as ethanol and methanol, low molecular weight ketones, such as acetone and methylethyl ketone, low molecular weight ether, such as diethyl ether and other organic solvents such as tetrahydrofuran and methylene chloride. In order to determine the amount of wash solvent necessary, equal amounts of the crude, dry, cyclodextrin complex can be washed with increasing amounts of organic solvent and the resulting wash product analyzed for platinum group metal material guest. If a subsequent assay of the product washed at two different levels indicates that the guest content has leveled off, a lesser amount of wash solvent can be chosen. Presumably, all the uncomplexed guest has been removed from the crude product when the amount of guest in the wash solvent plateaus. If no such leveling off of the guest content in the wash product is seen, then the wash solvent is believed to be decomplexing the guest and a different wash solvent should be selected for more effective washing.

The following examples further illustrate the practice of the method of the present invention where all parts are by weight.

### Example 1

Five grams of beta cyclodextrin were added to 45mL of water and the resulting mixture was stirred and heated to 60°C for about 1.5 hours until all of the beta cyclodextrin dissolved. There was added to the beta cyclodextrin solution, 1.70 grams of solid CODPtCl₂ (1.70g) (COD = 1,5-cyclooctadiene) and the resulting mixture was heated with stirring for 1.5 hours. Subsequently, a solid precipitate formed which was collected by filtration. The resulting gray-white solid was washed with about 50mL of water. The solid was then dried at 105°C at ambient pressure. The resulting solid was then placed in a soxhlet thimble and continuously extracted with methylene chloride for 10 hours. The resulting solid was then dried in vacuo. Based on method of preparation, there was obtained an inclusion complex of beta cyclodextrin and CODPtCl₂ (dry).

The above procedure was repeated except that the recovered precipitate after the formation of the complex was not dried. There was obtained an inclusion compound of beta cyclodextrin and CODPtCl₂ (wet).

A one part heat curable silicone composition was prepared by adding 93mg (25ppm Pt) of the beta cyclodextrin CODPtCl₂ inclusion complex (dry) to a mixture of 400 grams of a silicone formulation consisting of 96 parts of a filled vinyl end-stopped polydimethylsiloxane fluid having a viscosity of 900 centipoise. The filled vinyl fluid consists of 50 parts of a vinyl containing polydimethylsiloxane fluid having a viscosity of 250-400 centipoise, 48 parts of granulated quartz having an average particle size of 10 microns, and 2 parts of carbon black. There was added to the above mixture of Pt and silicone fluid, 2 parts (16.8 grams) of a silicon hydride siloxane cross-linker having a viscosity of 35 centipoise. The resulting formulation was blended for 30 seconds using a high speed Waring blender. The resulting formulation had an initial viscosity of 800 centipoise at ambient temperatures. After an accelerated aging at 50°C, the viscosity of the mixture increased to 1450 centipoise after 11 days.

A portion of the freshly prepared curable silicone formulation was also cured in a 1/16'' thick mold with a heated Carver press at 150°C at a pressure of 5 tons platen for 30 minutes. There was obtained an elastomer having a shore A of 64, a tensile (psi) of 360 and an elongation of 89%.

The above procedure for making a one part heat curable silicone composition utilizing the cyclodextrin CODPtCl₂ complex (dry) was repeated for at least five consecutive times and it was found that substantially the same results were obtained.

The above procedure was repeated except that in place of the beta cyclodextrin CODPtCl₂ complex (dry), there was utilized in the one part heat curable silicone formulation as the curing catalyst an equivalent amount of the beta cyclodextrin CODPtCl₂(wet). It was found that out of about 3 mixtures subjected to accelerated aging conditions at a temperature of 50°C, gellation occurred in 1 of the mixtures in 1-2 days. However, it was found that the remaining one part heat curable silicone formulations utilizing the beta cyclodextrin CODPtCl₂ complex (wet) provided satisfactory heat cured formulations which resisted gellation after a 2-27 day period.

Although the above example is directed to only a few of the very many variables which can be employed in the practice of the method of the present invention, it should be understood that the present invention is directed to the use of a much broader variety of cyclodextrin platinum group metal complexes as well as vinyl substituted polydiorganosiloxanes and silicon hydrides siloxanes which are set forth in the description preceding this example.

## Claims

1. A method for making a one part heat curable organopolysiloxane composition comprising a vinyl organopolysiloxane, a silicon hydride siloxane and a platinum group metal material as a latent hydrosilylation catalyst in the form of an inclusion compound of a cyclodextrin and a platinum group metal material, which method comprises, using as the inclusion compound of a cyclodextrin and the platinum group metal material , an inclusion compound prepared by,
(1) blending a platinum group metal material and an aqueous solution of cyclodextrin to produce a precipitate having about 0.5 to 2 equivalents of platinum group metal, per mole of cyclodextrin,
(2) recovering the precipitated material resulting from (1),
(3) drying the recovered precipitated material of (2) until IR or NMR spectral analysis shows it is substantially free of water,
(4) washing the resulting dried product of (3) with an organic solvent until an inclusion compound is provided having cyclodextrin as the host material and platinum group metal material as the guest molecule, which inclusion compound is substantially free of uncombined guest molecules.

2. A method in accordance with claim 1, where the platinum group metal material is a complex of a platinum dichloride.

3. A method in accordance with claim 1, where the platinum group metal material is an alkyl substituted platinum compound.

4. A method in accordance with any preceding claim, where the cyclodextrin is beta cyclodextrin.

5. A method in accordance with any preceding claim where the vinyl organopolysiloxane is a vinyl polydimethylsiloxane.

6. A method in accordance with any preceding claim, where the silicon hydride siloxane is a silicon hydride methylsiloxane.

7. A method in accordance with any preceding claim, where the organic solvent is methylene chloride.

8. A method in accordance with claim 1, where the platinum group metal material is a complex of platinum dichloride and 1,5-cyclooctadiene.
